Europäisches Patentamt

**European Patent Office**

**Office européen des brevets**

(19)

(11) Veröffentlichungsnummer: **0 118 788**
**B1**

(12) # EUROPÄISCHE PATENTSCHRIFT

(45) Veröffentlichungstag der Patentschrift:
**17.11.88**

(51) Int. Cl.⁴: **F 03 G 7/04**

(21) Anmeldenummer: **84101502.7**

(22) Anmeldetag: **14.02.84**

(54) Verfahren und Einrichtung zur Nutzbarmachung von geothermischer Energie.

(30) Priorität: **14.02.83 HU 48483**

(43) Veröffentlichungstag der Anmeldung:
**19.09.84 Patentblatt 84/38**

(45) Bekanntmachung des Hinweises auf die Patenterteilung:
**17.11.88 Patentblatt 88/46**

(84) Benannte Vertragsstaaten:
**DE FR IT NL SE**

(56) Entgegenhaltungen:
**CH - A - 82 594**
**DE - A - 2 405 595**
**DE - A - 2 746 643**
**FR - A - 2 297 334**
**GB - A - 1 293 624**
**NL - A - 7 905 625**
**US - A - 3 470 943**
**US - A - 3 957 108**
**US - A - 4 290 266**
**US - A - 4 297 847**

(73) Patentinhaber: **Mélyépítési Tervezö Vállalat, Vigado tér 1, H-1051 Budapest (HU)**

(72) Erfinder: **Szekely, Lajos, Dipl.-Ing. Dr., Koiostor u. 17., H-1037 Budapest (HU)**
Erfinder: **Csorba, István, Dipl.-Ing., Muk L.u. 5/a., H-1133 Budapest (HU)**
Erfinder: **Bódás, Sándor, Dipl.-Ing., Ond vezér u. 1-3., H-1144 Budapest (HU)**

(74) Vertreter: **Patentanwälte Viering & Jentschura, Steinsdorfstrasse 6, D-8000 München 22 (DE)**

## Beschreibung

Die Erfindung bezieht sich auf ein Verfahren und eine Anlage zur Nutzbarmachung von geothermischer Energie.

Bestrebungen zur Nutzbarmachung des Wärmeinhalts von trockenen Gesteinen – ihrer geothermischen Energie – sind bekannt. Als «künstliche Warmwassererzeugung» kann das Zweibrunnensystem bezeichnet werden, bei dem durch einen der Brunnen Wasser in das Gestein gedrückt und aus dem anderen das erwärmte Wasser herausgeleitet wird. Zwischen den beiden Brunnen muss entsprechend für eine hydraulische Verbindung gesorgt werden; z.B. müssen durch Sprengung Aushöhlungen, Spalte u.dgl. ausgebildet werden. Damit die unteren Endpunkte der Brunnen nahe beieinander zu liegen kommen, werden auch schiefgebohrte Brunnen ausgeführt. Auf diesem Grundsatz der «künstlichen Warmwassererzeugung» beruht auch die in der HU-B-165 379 dargelegte Ausführungsform, in welcher eine der Warmwassererzeugung angepasste Brunnenausbildung vorgeschlagen wird: der Speicherraum ist ein mit einem Futterrohr geschützter, am Auflager über einen Verschlussstopfen von der Bodenschicht getrennter Raum des Bohrloches, während der Steigraum ein in das Futterrohr eingebautes, isoliertes Förderrohr ist. Für die Strömung des Wassers aus dem ringförmigen Raum in das Futterrohr sorgt eine Pumpe.

Nachteilig ist bei den Ausführungsformen von vorangehend beschriebener Art der ziemlich hohe Kostenaufwand. Der Grund dafür liegt darin, dass teils wegen des kontinuierlichen Pumpenbetriebes der Energieaufwand sehr hoch ist, teils eine wirkungsvolle Isolierung des Förderrohres erforderlich wird; sonst gibt nämlich das gewonnene Warmwasser noch unter der Erdoberfläche seine Wärme an das eingepumpte Kaltwasser zurück. Eine wirkungsvolle Isolierung hat aber einen hohen Platzbedarf, wodurch die sowieso kleinen Durchflussquerschnitte noch kleiner werden, was den Energiebedarf der Kreislaufapparatur weiter vergrössert. Wird ein solches Zweibrunnensystem angewendet, bei welchem das Wasser vom Gestein unmittelbar erwärmt wird, zeigt sich als weiterer Nachteil, dass das gewonnene Wasser – ähnlich den Thermalwässern – auch unerwünschte mineralische Stoffe enthalten kann und ein Verkalken zu befürchten ist.

Um die bei der erwähnten Einbrunnen-Lösung sich zeigenden Nachteile zu beseitigen (Wärmeaustausch zwischen Aussen- und Innenrohr, bzw. aufwendige Isolierung, sowie Pumpenbetrieb) wurden solche Vorschläge bekannt, nach denen die Differenz des Wärmeinhalts der eingepumpten Flüssigkeit und des gewonnenen Dampfes von gleicher Temperatur, d.h. die Verdampfungswärme nutzbar gemacht werden soll.

Bei solchen Ausführungsformen wird eine rationelle Verwirklichung in grossen Masse durch die Tatsache gehindert, dass der Druck in der Wassersäule mit der Tiefe zunimmt, wodurch mit dieser Methode nur äusserst wenig Dampf erzeugt werden kann. Diese Feststellung gilt auch für die unter der Aktennummer SE-1710 veröffentlichte ungarische Patentanmeldung, gemäss welcher die Flüssigkeit, z.B. Wasser, auf die innere Mantelfläche eines mit geothermischer Energie erhitzten Dampfförderrohres geleitet und an dieser heruntergerieselt wird, so dass sich der zur Verdampfung erforderliche Druck über die ganze Tiefe der Brunnenkonstruktion hin aufbauen kann. Ein Nachteil dieser Ausführungsform besteht darin, dass sie nahezu mit atmosphärischem Druck oder mit Vakuum arbeitet (die oberirdischer Armaturen sind auch dementsprechende: eine Vakuumpumpe ist eingebaut, aber ein Abblasventil ist nicht vorhanden), was schon bei einer kleinen Leistung eine beträchtliche Dampfgeschwindigkeit erfordert. Es folgt daraus, dass zur Abtrennung der Gasphase von der Flüssigkeitsphase in jedem Fall ein sogenanntes Trennrohr eingebaut werden muss, jedoch bleibt die Leistung auch dann noch beschränkt. Ein Problem im Zusammenhang mit dem Trennrohr entsteht auch noch daraus, dass die Flüssigkeit von der Innenfläche des Dampfförderrohres durch irgendeine Konstruktionsasymmetrie auf das Trennrohr gelangt und in dieser Form auch dort bleibt, weil keine Massnahme getroffen ist, die Flüssigkeit zur Innenfläche des Dampfförderrohres zurückzuleiten. Aus Konstruktionsgründen ist es nachteilig, dass die Flüssigkeit durch Düsen auf die Rohrwand gelangt, was – wegen der Zerstäuberwirkung – eine gleichmässige Benetzung nicht sicherstellt. Schliesslich besteht ein weiterer Nachteil darin, dass eine entsprechende Wärmeübertragung zwischen der Brunnenkonstruktion und dem Gestein nicht sichergestellt werden kann, also auch die erzielbare Leistung nicht optimal wird.

Durch die Erfindung wird die Aufgabe gelöst, die Nutzbarmachung der geothermischen Energie derart zu gestalten, dass sie auf der Umwandlung des flüssigen Mediums in Dampf beruht, aber nicht die oben dargelegten Nachteile der bekannten diesem Zwecke dienenden Lösungen aufweist, d.h. von den Folgen einer allzu grossen Dampfgeschwindigkeit, den Problemen durch das Vorhandensein eines Trennrohres sowie den schädlichen Auswirkungen durch eine schlechte Wärmeübergabe zwischen Brunnenkonstruktion und Gestein nicht betroffen wird.

Die Erfindung beruht insbesondere auf der Erkenntnis, dass mit der Einstellung eines entsprechenden Überdruckes im Brunnen und durch eine entsprechende Auswahl des wärmeübertragenden Mediums erreicht werden kann, dass die spezifische Verdampfungswärme des gesättigten Dampfes hinreichend gross ist, um die dem Gestein entziehbare Wärmemenge mit einer so kleinen Geschwindigkeit auszutragen, bei der eine dem Dampf entgegengerichtete Strömung der Flüssigkeit noch zustandekommen kann, wobei – im Vergleich zum eingestellten Überdruck – die Möglichkeit besteht, auch den Strömungsdruckverlust vernachlässigen zu können. Das bedeutet, dass ein – die Funktion störendes bzw. behinderndes – Trennrohr nicht eingebaut zu werden braucht, der Dampfdruck aber – und hiermit die Sättigungstemperatur des Dampfes – über die ganze Länge des Brunnens hin im wesentlichen als konstant betrachtet werden kann, was eine grundsätzliche Bedingung dafür bildet, dass die dem Gestein bei gegebener Austrittstemperatur entziehbare Wärmemenge praktisch in vollem Masse nutzbar gemacht werden kann.

Aufgrund dieser Erkenntnis wurde die Aufgabe im Sinne der Erfindung durch ein Verfahren gelöst, bei welchem in ein Dampfförderrohr, das in das unter der Erdoberfläche liegende Gestein abgeteuft ist, an seiner Innenseite mit einer Flüssigkeit berieselt wird, die durch Einwirkung der geothermischen Wärme verdampft wird, und dieser Dampf – z.B. durch Erzeugung von elektrischer Energie – nutzbar gemacht wird. Gemäss der Erfindung wird im Dampfförderrohr ein den atmosphärischen Druck übersteigender Druck (Überdruck) eingestellt und in dem Dampfförderrohr wird als filmartige Schicht eine solche Flüssigkeit heruntergerieselt, die bei dem eingestellten Überdruck eine spezifische Verdampfungswärme von wenigstens 1000 kJ/m³ gesättigten Dampfes aufweist. Als Flüssigkeit wird bis zu Brunnentemperaturen von etwa 100–120 °C Ammoniak (NH₃) und/oder verschiedene Freone, z.B. F12, F22 und/oder Kohlenwasserstoffe, z.B. C₃H₆, C₃H₈, verwendet. Unter «Brunnentemperatur» soll die Innentemperatur des Brunnens verstanden werden, die praktisch entlang des ganzen Brunnens – anders ausgedrückt, entlang des Dampfförderrohres – konstant ist. Die Brunnentemperatur hängt teils von der Brunnentiefe, teils vom im Brunnen eingestellten Druck ab.

Als Ergebnis dieser Massnahmen kann die dem Gestein entziehbare Wärmemenge mit einem relativ kleinen Dampfvolumen, also mit kleiner Dampfgeschwindigkeit – ohne ein Trennrohr einbauen zu müssen – ausgebeutet werden, weil das letztere nur bei hohen Dampfgeschwindigkeiten notwendig ist. Von grossem Vorteil ist es, dass die Temperatur der eingedrückten Flüssigkeit und die des entnommenen Dampfes gleich sind, und zwar die Sättigungstemperatur des Dampfes bei gegebenem Druck haben. Das Einstellen des Überdruckes erfolgt im übrigen so, dass dem austretenden Dampf eine im voraus bestimmte Wärmemenge entzogen wird; der Überdruck ist nämlich von der entzogenen Wärmemenge abhängig. Das Mass der Menge der entnommenen (nutzbar gemachten) Wärme kann mit einer vor der Einstellung eines sich selbst regelnden Betriebes (siehe später) genommenen Probe festgestellt werden.

Von den genannten Flüssigkeiten wird im Dampfförderrohr vorzugsweise diejenige Flüssigkeit heruntergerieselt, zu deren Siedepunkt bei der gegebenen geothermischen Temperatur – im allgemeinen zwischen 50–150 °C – innerhalb der Druckhaltefähigkeit der Brunnenkonstruktion und der oberirdischen Einrichtungen für die Nutzbarmachung der grösstmögliche Gleichgewichtsdruck gehört und deren Verdampfungswärme möglichst hoch ist. In diesem Fall kann man bei verhältnismässig kleiner Dampfgeschwindigkeit eine hohe Leistung erhalten.

Aus der US-A-4 290 266 ist es zur Nutzung geothermischer Energie an sich bekannt, am Boden eines Bohrloches einen Kältemittelverdampfer anzuordnen. Als Kältemittel wird z.B. Freon verwendet.

Vorzugsweise wird bei dem erfindungsgemässen Verfahren das während der Nutzbarmachung anfallende Kondensat in einem geschlossenen System in das Dampfförderrohr zurückgeführt und auf diese Weise wird der Betrieb der Einrichtung selbstregulierend gemacht.

Zur Durchführung des erfindungsgemässen Verfahrens wird eine Anlage bevorzugt, welche ein in das unter der Erdoberfläche befindliche Gestein eingebettetes Dampfförderrohr, eine an das obere Ende des Dampfförderrohres angeschlossene Vorrichtung für die Flüssigkeitszufuhr, ein Dampfauslassrohr sowie eine der Energieumwandlung des herausgeleiteten Dampfes dienende Vorrichtung aufweist. Das Wesen dieser Anlage besteht darin, dass das Dampfförderrohr unter Überdruck setzbar ist und die Vorrichtung für die Flüssigkeitszufuhr mit einem Verteilergefäss versehen ist, in dem ein die Flüssigkeit in einer filmartigen Schicht auf die innere Fläche des Dampfförderrohres leitender ringförmiger Überlauf angeordnet ist, der die in das Verteilergefäss mündende Öffnung des Dampfförderrohres umgibt.

Aus der CH-A-82 594 ist ein Kessel zum Verdampfen verdünnter Lösungen in vertikalen beheizten Rohren an sich bekannt, an deren Innenseite die zu verdampfende Flüssigkeit heruntergerieselt wird. Hierzu ist das obere Ende der Rohre in einem Flüssigkeitszuführraum als trichterförmiger Überlauf ausgebildet.

Eine Ausführungsform der erfindungsgemässen Anlage, bei welcher das Dampfförderrohr wenigstens mit seinem oberen Abschnitt innerhalb eines Mantelrohres (Futterrohres) mit Abstand angeordnet ist und das Futterrohr eine Thermalwasser enthaltende Schicht durchquert, ist dadurch gekennzeichnet, dass das Futterrohr im Bereich der das Thermalwasser enthaltenden Schicht geöffnet ist, so dass das Thermalwasser in dem ringförmigen Raum zwischen dem Dampfförderrohr und dem Futterrohr, und dann von hier an die Erdoberfläche geleitet wird. In dieser Weise wird das Dampfförderrohr, wenigstens der obere Teil des Rohres, wärmeisoliert und – gegebenenfalls – wird das herausgeleitete Thermalwasser nutzbar gemacht.

Aus dem Gesichtspunkt der optimalen Wärmenutzbarmachung ist es vorteilhaft, wenn die Lücken, z.B. Aushöhlungen, Poren, Spalte usw. des Gesteins wenigstens im Bereich der dampferzeugenden Zone des Dampfförderrohres mit einem sich nachträglich verfestigenden Material mit guter Wärmeleitfähigkeit ausgefüllt sind. Das sich nachträglich verfestigende Material mit guter Wärmeleitfähigkeit kann als ein Gemisch aus hydraulischen Bindemitteln (z.B. Zementstaub) und Zuschlägen mit guter Wärmeleitfähigkeit (z.B.

Graphitstaub), ferner Wasser sowie – ggf. – aus anderen Zusatzmitteln (z.B. Betonplastifikatoren, Abbindeverzögerern u.dgl.) hergestellt werden. Es ist vorteilhaft, wenn der mit gut wärmeleitendem Material auszufüllende Bereich des Gesteins durch Sprengung und/oder hydraulisch oder/und auf eine andere Weise zerklüftet wird und wenn das sich nachträglich verfestigende Material guter Wärmeleitfähigkeit in die Spalte injiziert wird.

Aus der NL-A-7 905 625 ist es bereits bekannt, in das ein geothermisch beheiztes Rohr, durch welches eine Flüssigkeit zirkuliert wird, umgebende Gestein örtlich ein gut wärmeleitendes Material einzupressen, so dass in dem Gestein zu dem Rohr hin wärmeableitende Rippen ausgebildet werden.

Eine weitere Ausführungsform der erfindungsgemässen Anlage besteht darin, dass in dem Dampfförderrohr eine Füllung aus z.B. Raschig-Ringen oder dergleichen angeordnet ist. Hierbei wird die Flüssigkeit an der Innenfläche des dampferzeugenden Rohres oder/und an der Füllung heruntergerieselt, welche im dampferzeugenden Rohr in einem einen ausreichenden Aufströmungsquerschnitt für den Dampf sicherstellenden Masse bzw. in geeigneter Weise ggf. das dampferzeugende Rohr von innen stützend, angeordnet ist.

Die Erfindung wird ausführlicher anhand der Zeichnung erläutert, die zwei vorteilhafte Ausführungsbeispiele einer erfindungsgemässen Anlage darstellt. In der Zeichnung zeigen:

Fig. 1 in einem schematischen vertikalen Längsschnitt eine solche Ausführungsform der Anlage in stark verzerrtem Massstab, bei der der Brunnen über seine ganze Länge hin in trockenes Gestein eingebettet ist, und

Fig. 2 in einem ebenfalls schematischen vertikalen Längsschnitt ein Detail eines solchen Brunnens, der an einem Abschnitt von Thermalwasser, und im übrigen von trockenem Gestein umgeben ist.

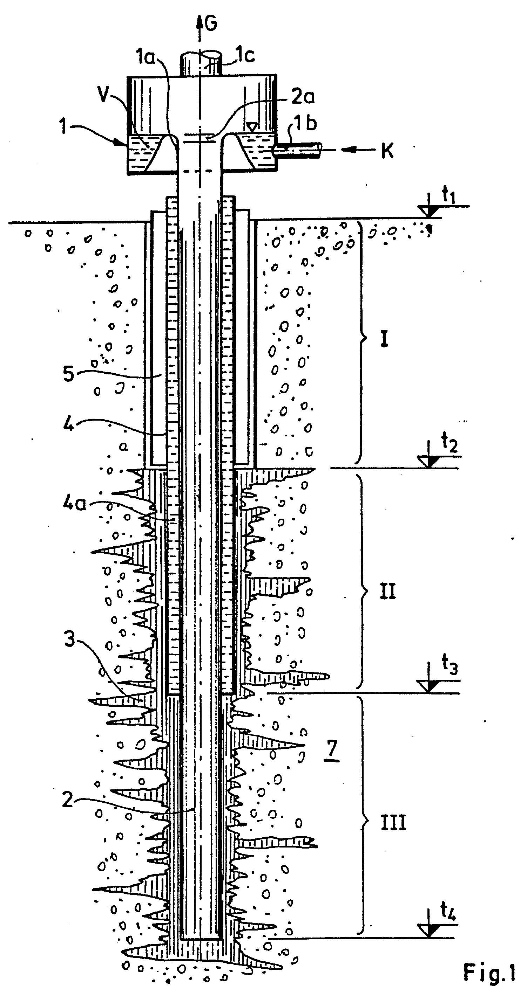

Der in Fig. 1 dargestellte Brunnen weist ein dichtwandiges Dampfförderrohr 2 mit verschlossenem Boden auf, wobei der Innenraum des Rohres gegen das Gestein 7 dicht verschlossen ist. An das obere Ende des Dampfförderrohres 2 ist ein als Ganzes mit der Bezugszahl 1 bezeichnetes Verteilergefäss angeschlossen. Die Öffnung 2a des in das Verteilergefäss 1 mündenden Dampfförderrohres 2 ist von einem ringförmigen Überlauf 1a umgeben, der die mit v bezeichnete Flüssigkeit so auf die innere Mantelfläche des Dampfförderrohres 2 leitet, dass die Flüssigkeit an der Mantelfläche filmartig herunterrieselt. Die Flüssigkeit kann durch den Rohrstutzen 1b vorzugsweise tangential in das zylinderförmige Verteilergefäss 1 nahe über dessen Boden eingeleitet werden. Über der Flüssigkeit ist in dem Verteilergefäss 1, welches zur Umgebung hin verschlossen ist, ein Dampfraum ausgebildet. Zur Dampfableitung ist der an der Decke des Verteilergefässes 1 angeschlossene Rohrstutzen 1c vorgesehen.

In Fig. 1 sind unter der Geländeoberfläche $t_1$ drei weitere Niveaus mit den Bezugszeichen $t_2$, $t_3$

und $t_4$ bezeichnet. Zwischen den Niveaus $t_1$ und $t_2$ befindet sich der Abschnitt I des Brunnens, zwischen den Niveaus $t_2$ und $t_3$ befindet sich der Abschnitt II, und zwischen den Niveaus $t_3$ und $t_4$ befindet sich der Abschnitt III. Die Abschnitte II und III werden nur aufgrund der allgemein angewendeten Verrohrungstechnologie voneinander abgesondert. Die Gesamttiefe des Brunnens – also die Gesamtlänge der Abschnitte I bis III – liegt im allgemeinen zwischen 800 und 4000 m. Von den jeweiligen geologischen Gegebenheiten abhängend gehört zu der Tiefe von 800 m eine Temperatur zwischen 50–80 °C, und zu 4000 m 180–200 °C und zwischen den unteren und oberen Grenzwerten verläuft die Temperaturänderung nahezu linear, bzw. sie hängt von den geologischen Verhältnissen ab.

Das Dampfförderrohr 2 ist in den Abschnitten I und II im Abstand von einem Futterrohr 4 umgeben. Der Raum zwischen dem Dampfförderrohr 2 und dem Futterrohr 4 ist mit einem wärmeleitenden Material 4a ausgefüllt (insbesondere im Abschnitt II), welche die Konsistenz des Festzustandes, aber auch des Flüssigkeitszustandes (z.B. als Warmwasser) aufweisen kann. Im letzteren Fall müssen auch das Futterrohr 4 dicht und der Raum zwischen dem Futterrohr 4 und dem Dampfförderrohr 2 geschlossen sein, um das Wasser halten zu können. Im Abschnitt I ist das Futterrohr 4 von aussen durch eine weitere Isolierung 5 umgeben, weil hier die Temperatur des Systems bzw. des Erdbodens derart niedrig ist, dass die Wirksamkeit des Brunnenbetriebes sich stark verringert.

Die Abschnitte II und III bilden gemeinsam die Dampferzeugungszone des Brunnens, entlang der sich anschliessende Lücken, Spalte und Poren des Gesteins 7 im Sinne der Erfindung mit einem sich verfestigenden Material 3 guter Wärmeleitfähigkeit ausgefüllt werden. Als solches Material kann eine aus hydraulischem Bindemittel (z.B. Zementstaub), Wasser und Zuschlägen mit guter Wärmeleitfähigkeit (z.B. Graphitstaub) und aus anderen Zusatzmitteln (z.B. Betonweichmachern, Abbindeverzögerern u.dgl.) zubereitete fliessfähige – injizierbare bzw. pumpbare – Mischung verwendet werden. Es wird bevorzugt die Korngrösse des hydraulischen Bindemittels und der Zuschläge guter Wärmeleitfähigkeit sowie ihre Dichte ähnlich gross zu wählen, damit die Mischung vor dem Festwerden leicht gepumpt werden kann. Das Zuschlagsmaterial mit guter Wärmeleitfähigkeit, z.B. Graphitstaub, soll – bis zu der die entsprechenden hydraulischen Eigenschaften nicht verschlechternden Grenze – in dem grösstmöglichen Verhältnis zur Mischung dosiert werden, damit so viele Körner des wärmeleitenden Materials wie möglich miteinander in Berührung kommen. Es wird bevorzugt, 60–65% des Feststoffgehaltes der Mischung aus dem Material guter Wärmeleitfähigkeit bestehen zu lassen. Wenn eine gute Wärmeleitfähigkeit auch durch die natürlichen Verhältnisse gesichert ist (z.B. durch eine sich weit erstreckende, Thermalwasser enthaltende Schicht), kann von der Injizierung der Mischung abgesehen werden. Dadurch, dass gemäss der obenerwähnten Massnahme der äussere Mantel der Brunnenkonstruktion mit Materialien hoher Wärmeleitfähigkeit und adäquater Festigkeit umgeben ist, vergrössert sich die wärmeübertragende Fläche und es kann die latente Wärme eines grösseren Gesteinsvolumens nutzbar gemacht werden. Den geologischen Eigenschaften entsprechend muss vor dem Injizieren des sich nachträglich verfestigenden Materials 3 – nach Bedarf – in gegebenem Fall eine Sprengung der Brunnenumgebung durchgeführt werden. Dieser Arbeitsgang kann z.B. hydraulisch, durch Anwendung von Sprengstoff oder eventuell mit Hilfe einer anderen Methode durchgeführt werden.

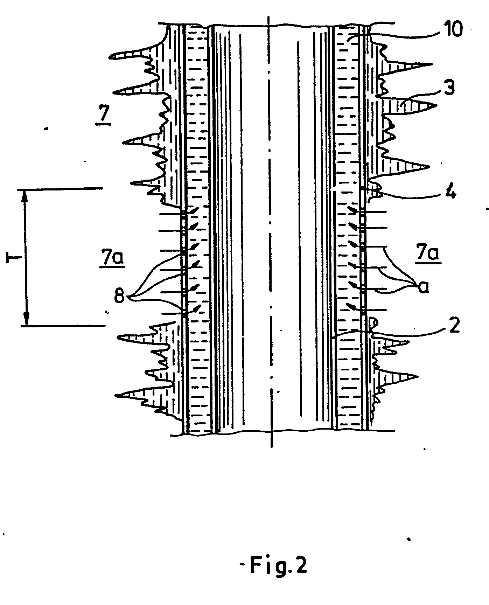

Die in Fig. 2 dargestellte Ausführungsform kann in solchen, häufig vorkommenden Fällen empfohlen werden, wenn z.B. ein 3000 m tiefer unproduktiver Ölbrunnen infolge der Wasserausbeutungs-Gegebenheiten in verhältnismässig geringer Tiefe (800–1500 m) angezapft wird, um z.B. 50–80 °C warmes Thermalwasser gewinnen zu können. Dabei bleibt der untere – von der Wärmeausbeutung her gesehen – wertvollste Abschnitt des Brunnens unausgenützt. Werden hingegen das im Bohrloch stehende (z.B. ∅ 9,5/8" starke) Futterrohr 4 z.B. durch Perforationen 8 zu der wasserspendenden Schicht 7a hin entlang einem Abschnitt mit der Höhe T geöffnet und in dem Futterrohr 4 ein gegen dieses hermetisch verschlossenes (z.B. ∅ 7" starkes) Dampfförderrohr 2 untergebracht und an dieses das in Fig. 1 gezeigte Verteilergefäss 1 oben angeschlossen, so werden einerseits die Isolierung des Dampfförderrohres 2 – durch das Thermalwasser selbst – sichergestellt und andererseits die Nutzbarmachung der geothermischen Energie im oberen Abschnitt der Brunnenkonstruktion gelöst. Die Eindringungsrichtung des Thermalwassers 10 in das Rohr 2 durch die Perforationen 8 ist durch die Pfeile a angegeben. Die Gesteinsbereiche 7 sind hingegen trocken, und längs diesen wird die bereits früher detaillierte wärmeleitende Ausfüll-Mischung in die sich entlang des Futterrohrmantels erstreckende Zone hineingebracht. Das abgezapfte Thermalwasser 10 kann im übrigen auf der Erdoberfläche auch gesondert nutzbar gemacht werden, und zwar entweder für energetische oder für sonstige Zwecke (z.B. als Badewasser).

Die erfindungsgemässe Einrichtung (Fig. 1) arbeitet so, dass das flüssige, energietragende Medium durch den Rohrstutzen 1b tangential in das Verteilergefäss 1 geleitet wird (Pfeil K), und dann über den ringförmigen Überlauf 1a auf die innere Mantelfläche des Dampfförderrohres 2 gelangt, wo es in einer filmartigen Schicht herunterrieselt. Bei der Inbetriebnahme wird im Dampfförderrohr 2 ein Überdruck eingestellt, bei dem bei der in den dampferzeugenden Abschnitten II, III herrschenden Temperatur die Flüssigkeit verdampft, in Richtung des Pfeiles G aufsteigt und durch den Rohrstutzen 1c abgeleitet wird. Die Energie des Dampfes wird in an sich bekannter Weise, z.B. für die Erzeugung von elektrischer Energie, nutzbar gemacht. Das während der Nutzbarmachung zu Flüssigkeit kondensierende wärmetragende Medium wird kontinuierlich durch den Rohrstutzen 1b in das Verteilergefäss 1 zurückgeleitet, wodurch die Dampferzeugung auch kontinuierlich gemacht werden kann. Wird das bei der Nutzbarmachung des erzeugten Dampfes anfallende Kondensat in einem geschlossenen System auf die Rohrwand des Dampfförderrohres 2 geleitet, sind also die Menge des zurückgeführten Kondensats zu dem Wärmeentzug, und die benetzte (also für die Dampferzeugung geeignete) Länge der Rohrwand zu der Menge des Kondensats proportional, dann funktioniert die Einrichtung mit Selbstregelung. Da das innere Volumen von der Flüssigkeitssäule nicht belastet ist, kann die Dampferzeugung unter einem Niveau bestimmter Temperatur überall zustandekommen.

Die Erfindung wird des weiteren anhand von Beispielen eingehend dargelegt.

Beispiel 1

Die Tiefe eines unproduktiven Ölbrunnens beträgt 3000 m. Das Dampfförderrohr hat einen inneren Durchmesser von 160 mm, der geothermische Gradient beträgt 17,5 m/ °C. Die Innentemperatur des Brunnens ist 90 °C. Es kann ausgerechnet werden, dass aus den tiefer liegenden Gesteinsbereichen ein Wärmestrom mit einer Leistung von etwa 1,0 MW entsteht. Im Dampfförderrohr wird ein Überdruck von 28,11 bar eingestellt und es wird ein wärmetragendes Medium mit entsprechender Verdampfungswärme, und zwar Freon F12, verwendet. Die thermodynamischen Eigenschaften dieses Mediums bei der gegebenen Temperatur sowie die strömungstechnischen Kennwerte sind nachstehend angeführt.

| | | |
|---|---|---|
| Dampftemperatur beim Austritt | 90 | °C |
| Leistung | 1,0 | MW |
| Sättigungsdruck | 18,11 | bar |
| Verdampfungswärme | 84,81 | kJ/kg |
| Dampfdichte | 177,305 | kg/m$^3$ |
| spezifische Verdampfungswärme | 15037,62 | kJ/m$^3$ |
| Dampfstrom | 11,791 | kg/s |
| Dampf-Volumenstrom | 0,0665 | m$^3$/s |
| Dampfgeschwindigkeit | 3,307 | m/s |
| Druckverlust | 3,00 | bar |
| Höchstdruck-Sättigungstemperatur | 93,1 | °C |

Aus diesen Angaben ist es ersichtlich, dass mit der erfindungsgemässen Methode diejenige geothermische Energie, die aus Gesteinen überhaupt gewonnen werden kann, mit gutem Wirkungsgrad nutzbar gemacht werden kann. Die Dampfgeschwindigkeit ist nur so gross, dass die Strömung der Flüssigkeit in entgegengesetzter Richtung eben noch ermöglicht wird, und auch der Strömungsdruckverlust kann im Vergleich zu dem eingestellten Überdruck vernachlässigt werden.

Auch die Differenz zwischen der Sohlentemperatur und der Austritts-Dampftemperatur (Brunnentemperatur) kann vernachlässigt werden, was die grundsätzliche Erklärung für den guten Wirkungsgrad darstellt. Die erzeugte Energie kann z.B. für Heizungszwecke verwendet werden.

### Beispiel 2

Die geothermische Energie des im Beispiel 1 beschriebenen Brunnens wird nutzbar gemacht, wobei jedoch die Brunnentemperatur 70 °C beträgt. In diesem Fall wird im Dampfförderrohr ein Überdruck von 33,77 bar eingestellt. Für diese Temperatur ist das am besten geeignete, eine hinreichende Verdampfungswärme aufweisende wärmetragende Medium das Ammoniak ($NH_3$). Die thermodynamischen Eigenschaften des Ammoniaks bei der gegebenen Temperatur und die für das Anwendungsbeispiel berechneten strömungstechnischen Kennwerte sind nachstehend angeführt:

| | | |
|---|---|---|
| Leistung | 1,5 | MW |
| Sättigungsdruck | 33,77 | bar |
| Verdampfungswärme | 938,84 | kJ/kg |
| Dampfdichte | 26,385 | $kg/m^3$ |
| spezifische Verdampfungs-wärme | 247771,19 | $kJ/m^3$ |
| Dampfstrom | 1,598 | kg/s |
| Dampf-Volumenstrom | 0,0605 | $m^3/s$ |
| Dampfgeschwindigkeit | 3,014 | m/s |
| Druckverlust | 0,37 | bar |
| Höchstdruck-Sättigungs-temperatur | 70,5 | °C |

Aus den obigen Angaben können ähnliche Folgerungen wie im Beispiel 1 gezogen werden; hier kann aber der Wirkungsgrad praktisch mit 100% angenommen werden, weil sich nur eine Temperaturdifferenz von 0,5 °C zeigt. Die Einrichtung kann auch hier zur Heizung bzw. Warmwassererzeugung verwendet werden.

### Beispiel 3

Es soll ein grösserer, etwa 5000 m tiefer Brunnen zur Dampferzeugung bei höherer Temperatur und zur Erzeugung elektrischer Energie nach dem erfindungsgemässen Verfahren nutzbar gemacht werden. Der Innendurchmesser des Dampfförderrohres im Brunnen beträgt 160 mm, der geothermische Gradient ist 18,0 m/ °C und die Sohlentemperatur beträgt 288 °C.

Im Brunnen wird ein Überdruck von 4,66 bar eingestellt und als wärmetragendes Medium wird Wasser verwendet, dessen Sattdampftemperatur am eingestellten Druck 150 °C beträgt (Brunnentemperatur). Es kann ausgerechnet werden, dass in diesem Fall aus den tieferliegenden Gesteinsbereichen in Richtung zu der Brunnenkonstruktion ein Wärmestrom mit einer Leistung von 1,5 MW entsteht. Die strömungstechnischen Kennwerte und ferner die Eigenschaften des Wassers bei dem oben angegebenen Druck und der Temperatur sind nachstehend angeführt:

| | | |
|---|---|---|
| Sättigungsdruck | 4,460 | bar |
| Verdampfungswärme | 2114,17 | kJ/kg |

| | | |
|---|---|---|
| Dampfdichte | 2,547 | $kg/m^3$ |
| spezifische Verdampfungs-wärme | 5384,73 | $kJ/m^3$ |
| Dampfstrom | 0,7095 | kg/s |
| Dampf-Volumenstrom | 0,2786 | $m^3/s$ |
| Dampfgeschwindigkeit | 13,86 | m/s |
| Druckverlust | 1,25 | bar |
| Sättigungstemperatur bei max. Dampfdruck | 158,3 | °C |

Der Vorteil der Erfindung besteht darin, dass sie die Nutzbarmachung der geothermischen Energie und eine rationelle Einschaltung von bisher überhaupt nicht oder ungenügend ausgenützten Energiequellen mit optimaler Wirksamkeit ohne Energieaufwand für einen Pumpenbetrieb ermöglicht.

### Patentansprüche

1. Verfahren zur Nutzbarmachung von geothermischer Energie, bei welchem ein Dampfförderrohr (2), welches in das unter der Erdoberfläche liegende Gestein (7) abgeteuft ist, an seiner Innenseite mit einer Flüssigkeit berieselt wird, die Flüssigkeit durch Einwirkung der geothermischen Wärme verdampft wird und der Dampf – zum Beispiel durch Erzeugung von elektrischer Energie – nutzbar gemacht wird, dadurch gekennzeichnet, dass die Flüssigkeit in dem Dampfförderrohr (2) als filmartige Schicht heruntergerieselt wird und als Flüssigkeit bis zu einer Brunnentemperatur von etwa 100–120 °C Ammoniak ($NH_3$) oder Freone (z.B. F12, F22), und/oder Kohlenwasserstoffe (z.B. $C_3H_6$, $C_3H_8$) verwendet wird, und dass in dem Dampfförderrohr (2) ein solcher den atmosphärischen Druck übersteigender Überdruck eingestellt wird, dass die Flüssigkeit in dem Dampfförderrohr (2) eine spezifische Verdampfungswärme von wenigstens 1000 $kJ/m^3$ gesättigten Dampfes aufweist.

2. Verfahren nach Anspruch 1, dadurch gekennzeichnet, dass das bei der Nutzbarmachung anfallende Kondensat in einem geschlossenen System in das Dampfförderrohr (2) zurückgeführt wird und auf diese Weise der Betrieb der Einrichtung selbstregulierend eingestellt wird.

3. Anlage zur Nutzbarmachung von geothermischer Energie, zur Durchführung des Verfahrens nach Anspruch 1, mit einem in das unter der Erdoberfläche befindliche Gestein eingebetteten Dampfförderrohr (2), einer an das obere Ende des Dampfförderrohres (2) angeschlossenen Vorrichtung für die Flüssigkeitszufuhr, einem Dampfauslassrohr (1c) sowie einer zur Umwandlung der Energie des herausgeleiteten Dampfes dienenden Vorrichtung, dadurch gekennzeichnet, dass das Dampfförderrohr (2) unter Überdruck setzbar ist und die Vorrichtung für die Flüssigkeitszufuhr ein Verteilergefäss (1) aufweist, in dem ein die Flüssigkeit in einer filmartigen Schicht auf die innere Oberfläche des Dampfförderrohres (2) leitender ringförmiger Überlauf (1a) angeordnet ist, der die in das Verteilergefäss (1) mündende Öffnung (2a) des Dampfförderrohres (2) umgibt.

4. Anlage nach Anspruch 3, bei welcher das Dampfförderrohr (2) wenigstens mit seinem oberen Abschnitt mit Abstand innerhalb eines Futterrohres (4) angeordnet ist und das Futterrohr (4) durch eine Thermalwasser (10) enthaltende Schicht (7a) führt, dadurch gekennzeichnet, dass das Futterrohr (4) im Bereich der Thermalwasser (10) enthaltenden Schicht (7a) geöffnet ist, so dass das Thermalwasser (10) in den zwischen dem Dampfförderrohr (2) und dem Futterrohr (4) ausgebildeten ringförmigen Raum und von dort auf die Erdoberfläche geleitet wird.

5. Anlage nach Anspruch 3 oder 4, dadurch gekennzeichnet, dass die Lücken des umgebenden Gesteins (7), zum Beispiel Aushöhlungen, Poren, Sprünge, Spalte und dergleichen, wenigstens in der dampferzeugenden Zone (II, III) des Dampfförderrohres (2) mit einem sich nachträglich verfestigenden Material (3) hoher Wärmeleitfähigkeit ausgefüllt sind.

6. Anlage nach Anspruch 5, dadurch gekennzeichnet, dass das sich nachträglich verfestigende Material (3) hoher Wärmeleitfähigkeit aus einer Mischung aus hydraulischem Bindemittel (z.B. Zementstaub) und Zuschlägen hoher Wärmeleitfähigkeit (z.B. Graphitstaub) hergestellt ist.

7. Anlage nach Anspruch 5 oder 6, dadurch gekennzeichnet, dass der mit einem Material (3) hoher Wärmeleitfähigkeit ausgefüllte Bereich des Gesteins (7) künstlich zerklüftet ist.

8. Anlage nach einem der Ansprüche 3 bis 7, dadurch gekennzeichnet, dass in dem Dampfförderrohr (2) eine Füllung aus Raschigringen oder dergleichen angeordnet ist.

**Claims**

1. Method to exploit geothermic energy using a steam feeding tube (2) sinked into the ground (7) under the earth's surface, and whose inner side is sprinkled with a liquid, the liquid being evaporated by geothermic heat and the steam – for example for producing electrical energy – is made exploitable, characterized in that the liquid is sprinkled down the steam feeding tube (2) as a film-like layer – and as said liquid ammoniak (NH$_3$) or Freon (like F12, F22), and/or hydrocarbons (like C$_3$H$_6$, C$_3$H$_8$) are used up to a well temperature of about 100–120 °C, and that within the steam feeding tube (2) such an excess pressure exceeding the atmospheric pressure is adjusted, that the liquid in the steam feeding tube (2) comprises a specific evaporating heat of at least 1000 KJ/m$^3$ of saturated steam.

2. Method as claimed in claim 1, characterized in that the condensate resulting during said exploitation is recirculated into the steam feeding tube (2) in a closed system, so that the operation of the device is adjusted to be self-regulating.

3. Device for exploiting geothermic energy, for realizing the method claimed in claim 1, comprising a steam feeding tube (2) being disposed within the ground below the earth's surface, a device coupled with the top end of the steam feeding tube (2) for getting fed with liquid, a steam outlet tube (1c) and a device for converting the energy of the steam being discharged, characterized in that the steam feeding tube (2) can be set under excess pressure and the device for liquid supply comprises a distribution vessel (1) in which an annular overflow (1a) surrounding the aperture (2a) of the steam feeding tube (2) opening into the distribution vessel (1) said overflow (1a) directing the liquid as a film-like layer to the inner surface of the steam feeding tube (2).

4. Device as claimed in claim 3 wherein the steam feeding tube (2) is disposed at least with it's upper portion within a mandrel (4) in spaced relation and said mandrel (4) is disposed within a layer (7a) containing thermal water (10), characterized in that the mandrel (4) comprises an aperture in the area of the layer (7a) containing the thermal water (10), so that the thermal water (10) is fed into the annular cavity between the steam feeding tube (2) and the mandrel (4) and therefrom is led to the earth's surface.

5. Device as claimed in claim 3 or 4, characterized in that the aperture of the surrounding ground (7), for example grooves, pores, faults, cracks and the like, are filled up at least within the steam producing area (II, III) of the steam feeding tube (2) with a material (3) of high thermal conductivity, which solidifies later on.

6. Device as claimed in claim 5, characterized in that the later on solidifying material (3) of a high thermal conductivity is made of a mixture of an hydraulic bonding agent (for example cement dust) and additives of high thermal conductivity (for example graphite dust).

7. Device as claimed in claim 5 or 6, characterized in that the area of the ground (7) being filled with material (3) of high thermal conductivity is artificially fissured.

8. Device according to one of the claims 3–7, characterized in that in the steam feeding tube (2) a filling of Raschig rings or the like is provided.

**Revendications**

1. Procédé de valorisation de l'énergie géothermique, dans lequel une conduite d'extraction de vapeur (2), enfoncée dans les roches (7) endessous de la surface du sol, est mouillée par ruissellement avec un liquide qui est évaporé sous l'influence de la chaleur géothermique, et dans lequel la vapeur est exploitée, par exemple, par production d'énergie électrique, caractérisé en ce que le liquide ruisselle de haut en bas sous forme de film ou pellicule dans la conduite d'extraction de vapeur (2), en ce que l'on utilise comme liquide, pour une température de puits d'environ 100 à 120 °C, de l'ammoniac (NH$_3$) ou des fréons (par exemple F12, F22), et/ou des hydrocarbures, par exemple C$_3$H$_6$, C$_3$H$_8$, et en ce que la conduite d'extraction de vapeur (2) est soumise à une pression supérieure à la pression atmosphérique telle que le liquide dans la conduite d'extraction de vapeur (2) présente une chaleur spécifique d'évaporation d'au moins 1000 KJ/m$^3$ de vapeur saturée.

2. Procédé selon la revendication 1, caractérisé en ce que le condensat formé au cours de la valorisation est recyclé en circuit fermé, vers la conduite d'extraction de vapeur (2), de sorte que l'on obtient ainsi un fonctionnement autorégulé de l'installation.

3. Installation de valorisation de l'énergie géothermique pour la mise en œuvre du procédé selon la revendication 1, qui comporte une conduite d'extraction de vapeur (2) encastrée dans les roches en-dessous de la surface du sol, un dispositif d'amenée de liquide raccordé à l'extrémité supérieure de la conduite d'extraction de vapeur (2), une conduite d'échappement de vapeur (1c) ainsi qu'un dispositif servant à la transformation de l'énergie de la vapeur sortante, caractérisée en ce que la conduite d'extraction de vapeur (2) est susceptible d'être soumise à une surpression et en ce que le dispositif d'amenée de liquide comporte un récipient distributeur (1) dans lequel est disposé un trop plein annulaire (1a) entourant l'orifice de la conduite d'extraction de vapeur qui débouche dans le réservoir, ledit trop plein étant appelé à conduire le liquide sous forme de film ou pellicule sur la surface intérieure de la conduite d'extraction de vapeur (2).

4. Installation selon la revendication 3, dans laquelle au moins la partie supérieure de la conduite d'extraction de vapeur (2) est disposée à l'intérieur d'une gaine tubulaire (4) et espacée radialement de celle-ci dans laquelle cette dernière traverse une couche (7a) contenant de l'eau thermale (10), caractérisée en ce que la gaine tubulaire (4) est ouverte dans la zone de la couche (7a) d'eau thermale (10), afin que l'eau thermale (10) soit conduite dans l'espace annulaire entre le tuyau d'extraction de vapeur (2) et ladite gaine (4), puis vers la surface du sol.

5. Installation selon la revendication 3 ou 4, caractérisée en ce que les interstices des roches environnantes (7), tels que creux, pores, failles, fissures etc. sont remplis, au moins dans la zone de production de vapeur (II, III) de la conduite d'extraction de vapeur (2), d'un matériau à durcissement retardé (3) présentant une conductibilité thermique élevée.

6. Installation selon la revendication 5, caractérisée en ce que le matériau à durcissement retardé (3) présentant une conductibilité thermique élevée est fabriqué à partir d'un mélange de liants hydrauliques, tels que poudre de ciment pulvérisé et de charges présentant une conductibilité thermique élevée, telles que poudre de graphite.

7. Installation selon la revendication 5 ou 6, caractérisée en ce que la zone de roches (7) remplie d'un matériau (3) présentant une conductibilité thermique élevée est fissurée artificiellement.

8. Installation selon l'une des revendications 3 à 7, caractérisée en ce que la conduite d'extraction de vapeur (2) est remplie d'anneaux Raschig ou similaires.

Fig.1

-Fig.2